(19) Europäisches Patentamt
European Patent Office
Office européen des brevets

(11) **EP 2 694 858 B1**

(12) **EUROPÄISCHE PATENTSCHRIFT**

(45) Veröffentlichungstag und Bekanntmachung des Hinweises auf die Patenterteilung:
**26.08.2015 Patentblatt 2015/35**

(21) Anmeldenummer: **12714662.9**

(22) Anmeldetag: **05.04.2012**

(51) Int Cl.:
*F16L 33/18* *(2006.01)*  *F16L 33/30* *(2006.01)*
*F16L 33/22* *(2006.01)*  *F16L 47/08* *(2006.01)*

(86) Internationale Anmeldenummer:
**PCT/EP2012/056316**

(87) Internationale Veröffentlichungsnummer:
**WO 2012/136784 (11.10.2012 Gazette 2012/41)**

(54) **LEITUNGSVERBINDER MIT EINEM ANSCHLUSSDORN FÜR EINE KUNSTSTOFF-ROHRLEITUNG**

LINE CONNECTOR HAVING A CONNECTION BARB FOR A PLASTIC PIPELINE

CONNECTEUR DE CONDUITE POURVU D'UN MANDRIN DE RACCORDEMENT POUR UNE CONDUITE TUBULAIRE EN PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2011 DE 102011016496**

(43) Veröffentlichungstag der Anmeldung:
**12.02.2014 Patentblatt 2014/07**

(73) Patentinhaber: **Voss Automotive GmbH**
**51688 Wipperfürth (DE)**

(72) Erfinder:
• **HAGEN, Harald**
**51688 Wipperfürth (DE)**
• **HASBERG, Markus**
**51688 Wipperfürth (DE)**
• **SIEPER, Günter**
**42853 Remscheid (DE)**

(74) Vertreter: **Patentanwälte**
**Dr. Solf & Zapf**
**Schloßbleiche 20**
**42103 Wuppertal (DE)**

(56) Entgegenhaltungen:
**DE-A1- 4 005 474      DE-A1- 19 543 782**
**US-A1- 2005 040 649    US-A1- 2007 001 453**
**US-B1- 6 561 550**

• **Anonymous: "Surface Finish Tolerances In Manfacturing", Wikipedia, the free encyclopedia , 23. April 2008 (2008-04-23), XP002710044, Gefunden im Internet: URL:http: //en.wikipedia.org/wiki/File:Surf ace_Finish_ Tolerances_In_Manfacturing.png [gefunden am 2013-08-06]**

**Beschreibung**

Die vorliegende Erfindung betrifft einen Leitungsverbinder für eine Kunststoff-Rohrleitung, insbesondere für ein PA-Rohr gemäß DIN 74324-1, mit einem einendig mit einem Verbindergehäuse verbundenen und gegenüberliegend mit einem freien Dornende in die Rohrleitung einsteckbaren, rohrförmigen Anschlussdorn, wobei der Anschlussdorn auf seinem Außenumfang ein Dornprofil mit einem vorderen, endseitigen Einführkonus und mehreren über seine Länge verteilt angeordneten Haltezähnen mit radial vorspringenden, in Umfangsrichtung verlaufenden, scharfkantigen Haltekanten aufweist.

Solche Leitungsverbinder sind hinlänglich bekannt (siehe DE 4005474 A1), wobei der Anschlussdorn durch seine üblicherweise vier scharfkantigen Haltezähne zum selbsthaltenden und selbstdichtenden Aufstecken bzw. "Aufdornen" insbesondere von PA-Rohren gemäß DIN 74324-1 vorgesehen ist, so dass das Rohr lediglich aufzustecken bzw. der Anschlussdorn in das Rohr einzuschlagen ist. Dabei schneiden sich die scharfkantigen Haltezähne etwas in die Innenfläche der Rohrleitung ein, wodurch einerseits die mechanische Halterung und andererseits die Abdichtung erreicht werden. Zusätzliche Haltemittel, wie z. B. äußere Spannschellen, Klemmen, Quetschhülsen oder dergleichen, sind nicht erforderlich.

Im praktischen Einsatz haben sich solche Leitungsverbinder bisher recht gut bewährt, es besteht aber für bestimmte Anwendungsfälle noch ein Verbesserungsbedürfnis. Insoweit liegt der Erfindung die allgemeine Aufgabe zu Grunde, einen Leitungsverbinder der eingangs beschriebenen, gattungsgemäßen Art hinsichtlich seiner Gebrauchseigenschaften weiter zu verbessern.

Gemäß einem ersten Erfindungsaspekt soll speziell die Dichtwirkung zwischen dem Anschlussdorn und der angeschlossenen Rohrleitung verbessert werden. Dies wird gemäß dem Anspruch 1 dadurch erreicht, dass der Anschlussdorn zusätzlich zu den Haltezähnen einen zylindrischen Dichtabschnitt mit einer umfangsgemäßen Dichtfläche zur dichtenden Anlage innerhalb der inneren Umfangsfläche der mit radialer elastischer Vorspannung anliegenden Rohrleitung aufweist. Der erfindungsgemäße Dichtabschnitt führt durch seine vergrößerte Dichtfläche in Verbindung mit der erreichten elastischen Rohr-Aufdehnung zu einer deutlich verbesserten Abdichtung. Hierbei sollte der zusätzliche Dichtabschnitt vorzugsweise in der Nähe des vorderen freien Dornendes des Anschlussdorns angeordnet sein, wobei der Einführkonus - vorzugsweise mittelbar über einen Aufweitkonus - in die Dichtfläche des zylindrischen Dichtabschnittes übergeht. Zudem ist es vorteilhaft, wenn die Dichtfläche in Umfangsrichtung glatt, versatzfrei und (form)gratfrei sowie mit einer maximalen Rautiefe $R_{max}$ von höchstens 10 $\mu$m ausgebildet ist. Dies entspricht der Qualität einer glatten, polierten Oberfläche für eine besonders gute Dichtwirkung innerhalb der Rohrleitung.

Im Zusammenhang mit dem ersten Erfindungsaspekt ist es weiterhin von Bedeutung, dass der Dichtabschnitt im Bereich der Dichtfläche mit einer geringen Rundheitstoleranz von vorzugsweise maximal 0,02 bis 0,025 mm ausgebildet ist. Durch diese bevorzugte Ausgestaltung wird eine gleichbleibend gute Dichtigkeit auch bei bzw. nach Verdrehungen des Anschlussdorns innerhalb der Rohrleitung erreicht. Dies ist vor allem dann von Bedeutung, wenn der Leitungsverbinder als Winkel-Steckverbinder ausgebildet ist, wobei der Anschlussdorn über das Verbindergehäuse in einen Steckabschnitt übergeht. In solchen Fällen muss häufig der Steckabschnitt zum Zusammenstecken mit einem korrespondierenden Steckverbindungteil bezüglich seines Winkels ausgerichtet werden, und zwar durch Verdrehung des Anschlussdorns innerhalb der Rohrleitung.

Gemäß einem zweiten Erfindungsaspekt soll die gegen ein Lösen wirkende Haltekraft des Anschlussdorns innerhalb der Rohrleitung verbessert werden. Dies wird gemäß dem Anspruch 2 dadurch erreicht, dass die Haltezähne mit ihren Haltekanten jeweils über einen axialen Abstand voneinander beabstandet sind, der in Anpassung an die zugehörige Rohrleitung und deren Innendurchmesser derart bemessen ist, dass der Abstand mindestens 2/3 des Rohr-Innendurchmessers und/oder mindestens der Hälfte des Außendurchmessers eines der Haltezähne entspricht. Durch diese erfindungsgemäße Ausgestaltung - auch hier wiederum in Verbindung mit einer besonderen elastischen Rohr-Aufdehnung - kann sich die Rohrleitung - bedingt durch ihre elastische, radiale Rückverformung in den jeweils zwischen zwei Haltezähnen liegenden Bereichen - besser an die Haltekanten der Haltezähne anlegen, so dass eine Erhöhung der effektiven Haltekraft erreicht wird.

Im Zusammenhang mit dem zweiten Erfindungsaspekt ist es zudem von Bedeutung, dass mindestens einer der Haltezähne im Bereich seiner Haltekante mit einer geringen Rundheitstoleranz von vorzugsweise maximal 0,05 mm ausgebildet ist. Hierdurch wird eine gleichbleibend gute mechanische Halterung mit zusätzlicher Dichtwirkung im Bereich des jeweiligen Haltezahnes auch bei bzw. nach Verdrehungen des Anschlussdorns innerhalb der Rohrleitung gewährleistet. Zur praktischen Bedeutung wird auf den oben bereits erläuterten Anwendungsfall in der Ausgestaltung als Winkel-Steckverbinder verwiesen.

Gemäß einem weiteren, dritten Erfindungsaspekt soll zur Vermeidung von Beschädigungen oder sogar Brüchen speziell die Schlagbiegefestigkeit des Anschlussdorns gegen quer zur Dornachse wirkende Belastungen verbessert werden. Dies wird gemäß dem Anspruch 3 dadurch erreicht, dass der Anschlussdorn bezüglich seines kreisringförmigen Wandungsquerschnitts und seines daraus resultierenden polaren Widerstandsmomentes über seine Länge hinweg derart ausgelegt ist, dass zumindest in einem hinteren, gehäuseseitigen Teilbereich seiner Länge ausgehend von einem bestimmten Abstand vom freien vorderen Dornende in Richtung des Verbindergehäuses nach hinten der Quotient aus dem jeweiligen Widerstandsmoment dividiert durch den zugehörigen axialen Abstand vom freien Dornende zunimmt. Aus dieser erfindungsgemäßen Ausgestaltung resultiert eine erhöhte Schlagbiegefestigkeit, so dass der erfindungsgemäße Anschlussdorn höheren Querkraftbeiastungen schadlos standhalten kann.

Was noch einen weiteren, vierten Erfindungsaspekt betrifft, so ist bei bekannten, gattungsgemäßen Leitungsverbindern häufig das Eindornen, d. h. das Einpressen des Anschlussdorns in die Rohrleitung, problematisch, weil nach einem anfänglichen Einsetzen des vorderen Bereiches des Einführkonus durch eine dabei auftretende geringe elastische Dehnung des Rohr-Mündungsbereiches der Anschlussdorn wieder herausrutscht. Es war deshalb bisher stets erforderlich, den Leitungsverbinder manuell in einer Vormontagestellung festzuhalten und dann - üblicherweise mit einem Hammer - den Anschlussdorn weiter in die Rohrleitung einzuschlagen. Dies bedeutete in der Praxis auch stets eine gewisse Verletzungsgefahr durch Hammerschläge. Diese recht umständliche Montage soll erleichtert werden. Dies wird gemäß dem Anspruch 4 dadurch erreicht, dass der vordere Einführkonus eine derart raue Oberfläche mit einem arithmetischen Mittenrauwert $R_a$ im Bereich von 1,1 bis 2,25 $\mu$m aufweist, dass beim Einstecken in die Rohrleitung im Bereich des Einführkonus eine kraftschlüssige Vorfixierung des Anschlussdorns im Mündungsbereich der Rohrleitung erreicht wird. Durch diese kraftschlüssige Vorfixierung wird somit wirksam vermieden, dass der Anschlussdorn vor dem eigentlichen Eindornen aus der Rohrleitung herausrutschen kann. Der Anschlussdorn kann aus der vorfixierten Stellung vorteilhafterweise ohne manuelles Festhalten eingedornt, d. h. insbesondere mit einem Hammer eingeschlagen werden. Dabei wird auch die Gefahr von eventuellen Verletzungen der den Leitungsverbinder festhaltenden Hand durch Hammerschläge praktisch beseitigt. An dieser Stelle sei ausdrücklich bemerkt, dass die beschriebenen Erfindungsaspekte einzeln, unabhängig voneinander angewendet werden können, aber auch in beliebigen Kombinationen von jeweils mindestens zwei der genannten Aspekte.

Zudem sind weitere vorteilhafte Ausgestaltungen in den abhängigen Ansprüchen sowie der anschließenden Beschreibung enthalten.

Anhand der Zeichnung und darin veranschaulichter, vorteilhafter Ausführungsbeispiele soll die Erfindung im Folgenden genauer erläutert werden. Dabei zeigen:

Fig. 1    eine Perspektivansicht eines erfindungsgemäßen Leitungsverbinders in einer bevorzugten Ausführung als Winkel-Steckverbinder,

Fig. 2    eine vergrößerte, halb axial geschnittene Seitenansicht des Bereiches des Anschlussdorns in Pfeilrichtung II gemäß Fig. 1 in einer ersten, bevorzugten Ausführungsform,

Fig. 3    eine gegenüber Fig. 2 verkleinerte Darstellung in einer weiteren Ausgestaltung,

Fig. 4    eine weitere Darstellung analog zu Fig. 3 in einer Ausführungsvariante,

Fig. 5    eine Ansicht analog zu Fig. 2 in einer weiteren alternativen Ausführung und

Fig. 6    die Ausführung gemäß Fig. 5 in einer weiteren Ausgestaltung.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

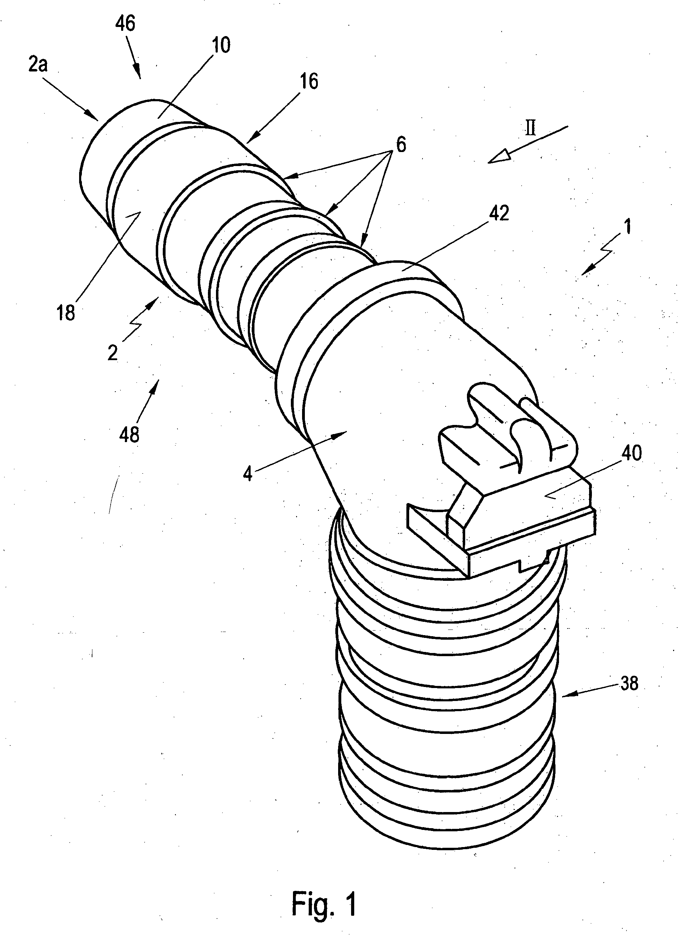

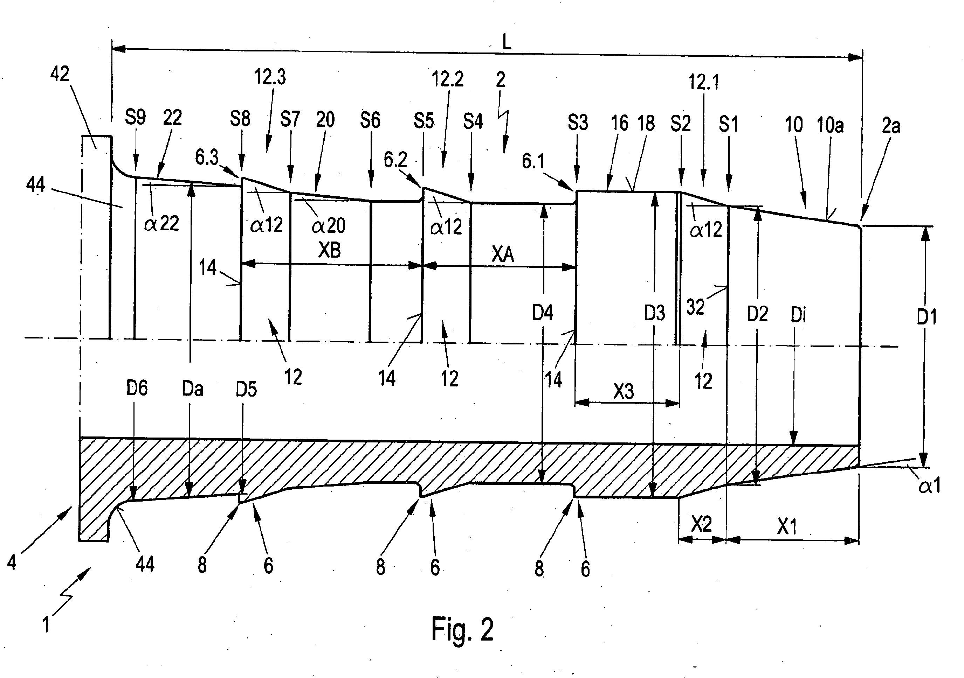

In Fig. 1 ist ein erfindungsgemäßer Leitungsverbinder 1 beispielhaft in einer Ausführung als Winkel-Steckverbinder dargestellt. Es sind aber auch beliebige andere Ausführungen möglich, wie z. B. gerade Steckverbinder oder T-Verbinder. Der Leitungsverbinder 1 weist einen rohrförmigen Anschlussdorn 2 zum Aufstecken einer nicht dargestellten Kunststoff-Rohrleitung, und zwar insbesondere eines PA-Rohrs gemäß DIN 74324-1, auf (PA = Polyamid). Der Anschlussdorn 2 ist einendig mit einem Verbindergehäuse 4 insbesondere einstückig verbunden und mit seinem gegenüberliegenden freien Dornende 2a in die Rohrleitung einzustecken. Um eine Selbsthalterung und eine umfangsgemäße Selbstabdichtung der Rohrleitung auf dem Anschlussdorn 2 ohne zusätzliche Halteelemente, wie äußere Spannschellen, Quetschhülsen oder dergleichen, zu erreichen, weist der Anschlussdorn 2 auf seinem Außenumfang ein Dornprofil mit miehreren über die Dornlänge verteilt und jeweils axial voneinander beabstandet angeordneten Haltezähnen 6 mit radial vorspringenden, in Umfangsrichtung verlaufenden, scharfkantigen Haltekanten 8 auf; siehe dazu insbesondere Fig. 2. In den Ausführungen nach Fig. 1 bis 4 weist der Anschlussdorn 2 drei Haltezähne 6.1, 6.2, 6.3 auf.

Im Zusammenhang mit den Haltekanten 8 der Haltezähne 6 ist der Begriff "scharfkantig" so zu verstehen, dass die Haltekanten 8 mit einem maximalen Kantenradius von 0,03 mm bis höchstens 0,1 mm ausgebildet sind, um ein Einschneiden oder Einkerben in das Material innerhalb der Rohrleitung zu erreichen. Weiterhin weist der Anschlussdorn 2 ausgehend von seinem freien Dornende 2a einen Einführkonus 10 auf, der sich von einem ersten, kleineren Außendurchmesser D1 bis auf einen zweiten, größeren Außendurchmesser D2 erweitert. Dabei sind D1 kleiner und D2 etwas größer als der Innendurchmesser der zugehörigen Rohrleitung. Der Einführkonus 10 erstreckt sich über einen Längenabschnitt X1, und seine konische Oberfläche 10a weist einen gegen die Längsachse gemessenen Konuswinkel $\alpha 1$ auf.

Jedem Haltezahn 6 bzw. 6.1 bis 6.3 mit seiner Haltekante 8 ist ein sich in Aufsteckrichtung der Rohrleitung konisch erweiternder Aufweitkonus 12 bzw. 12.1 bis 12.3 vorgeordnet, um die Rohrleitung über den Aufweitkonus 12 und die Haltekante 8 hinweg elastisch aufzudehnen und dadurch eine zur Halterung ausreichende elastische Vorspannung in radialer Richtung zu erreichen. Dabei ist jede Haltekante 8 durch eine radiale, den Außendurchmesser des Anschlussdorns 2 reduzierende Stufenfläche 14 gebildet.

Ein erster Erfindungsaspekt besteht nun darin, dass der Anschlussdorn 2 - zusätzlich zu den Haltezähnen 6 - einen zylindrischen Dichtabschnitt 16 mit einer umfangsgemäßen Dichtfläche 18 aufweist. Hierbei weist der Dichtabschnitt 16 einen derart an die Rohrleitung, insbesondere an deren Innendurchmesser und die sonstigen Materialeigenschaften, angepassten Außendurchmesser D3 auf, dass die auf den Anschlussdorn 2 aufgesteckte Rohrleitung im Bereich des Dichtabschnittes 16 unter elastischer Aufdehnung mit radialer Vorspannung zur dichtenden Anlage auf der Dichtfläche 18 gelangt.

Bei den Ausführungen gemäß Fig. 1 bis 4 ist der Dichtabschnitt 16 in der Nähe des vorderen, freien Dornendes 2a angeordnet, und zwar zwischen dem ersten Haltezahn 6.1 und dem zugehörigen, vorgeordneten Aufweitkonus 12.1. Somit wird über den Aufweitkonus 12.1 die Rohrleitung sowohl für den Dichtabschnitt 16 als auch für den ersten Haltezahn 6.1 aufgedehnt, so dass eine elastische, radiale Vorspannung in diesem Bereich erreicht wird. Dabei geht der Einführkonus 10 über den Aufweitkonus 12.1 in die Dichtfläche 18 über.

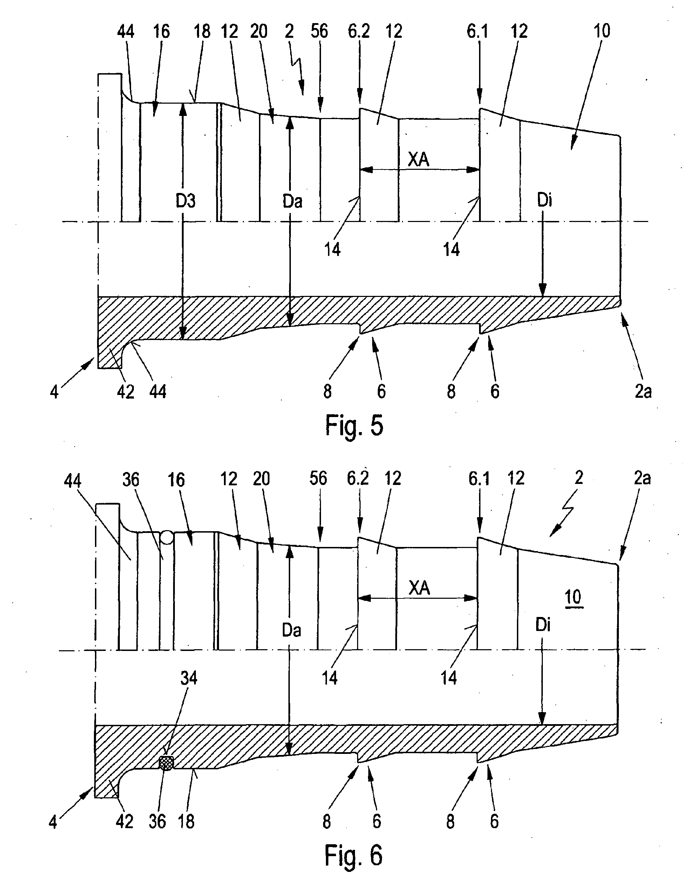

In den alternativen Ausführungen gemäß Fig. 5 und 6 ist der Dichtabschnitt 16 in der Nähe des hinteren, mit dem Verbindergehäuse 4 verbundenen Endes des Anschlussdorns 2 angeordnet. Daher sind nur zwei Haltezähne 6 vorhanden, weil die Dichtfläche 18 in ein hinteres, gehäuseseitiges Anschlagelement 42 übergeht. Allerdings kann alternativ vorgesehen sein, dass sich an die Dichtfläche 18 zur Bildung eines zusätzlichen Haltezahns 6 eine radiale Stufenfläche 14 analog zu Fig. 2 anschließt.

Gemäß einem zweiten Erfindungsaspekt sind die Haltezähne 6 mit ihren Haltekanten 8 jeweils über einen axialen Abstand XA bzw. XB voneinander beabstandet (siehe insbesondere Fig. 2), der in Anpassung an die zugehörige Rohrleitung und insbesondere deren Innendurchmesser derart bemessen ist, dass der jeweilige Abstand XA, XB mindestens 2/3 des Rohr-Innendurchmessers entspricht. Zusätzlich oder alternativ zu dieser Bedingung kann der Zahn-Abstand XA, XB mindestens dem halben Außendurchmesser des jeweiligen Haltezahns 6 bzw. der Dichtfläche 18 entsprechen. Durch diese erfindungsgemäße Auslegung kann sich die bereichsweise elastisch aufgedehnte Rohrleitung - bedingt durch ihre elastische, radiale Rückverformung in den jeweils zwischen zwei Haltezähnen 6 liegenden Bereichen - besser an die Haltekanten 8 der Haltezähne 6 anliegen, so dass eine Erhöhung der effektiven Haltekraft erreicht wird.

Im Vergleich zu einem bekannten Anschlussdorn, der über seine Länge hinweg vier Haltezähne aufweist, führt dieser zweite Erfindungsaspekt zu einer Vergrößerung der Zahnabstände XA, XB. Um nun die Gesamtlänge L des Anschlussdorns 2 nicht oder zumindest nicht wesentlich zu verlängern, weist der erfindungsgemäße Anschlussdorn 2 nur drei Haltezähne 6 (Fig. 1 bis 4) oder sogar nur zwei Haltezähne (Fig. 5, 6) auf, wobei aber durch die erfindungsgemäße Auslegung dennoch eine Erhöhung der Haltekraft erreicht wird.

Ein dritter Erfindungsaspekt betrifft die Erhöhung der Schlagbiegefestigkeit des Anschlussdorns 2 zur Vermeidung von Beschädigungen bei Querbelastungen. Dazu ist erfindungsgemäß vorgesehen, dass der Anschlussdorn 2 bezüglich seines kreisringförmigen Querschnitts, d. h. bei über die Länge L hinweg konstantem Innendurchmesser Di (Fig. 2) speziell des jeweiligen Außendurchmessers Da, und des daraus jeweils resultierenden polaren Widerstandsmomentes

$$Wp = \frac{\pi}{16} \cdot \frac{Da^4 - Di^4}{Da}$$

über seine Länge hinweg derart ausgelegt ist, dass zumindest in einem hinteren, gehäuseseitigen Teilbereich seiner Länge ausgehend von einem bestimmten Abstand s6 vom freien vorderen Dornende 2a in Richtung des Verbindergehäuses 4 nach hinten der Quotient Wp/s aus dem jeweiligen Widerstandsmoment Wp und dem zugehörigen axialen Abstand s vom freien Dornende 2a zunimmt.

Durch diese erfindungsgemäße Ausgestaltung wird eine effektive Erhöhung der Schlagbiegefestigkeit erreicht, die in Anlehnung an DIN 53453 bzw. an die DIN EN ISO 178 mit einem so genannten Pendelschlagwerk gemäß DIN 51222 ermittelt werden kann.

Gemäß Fig. 2 beginnt in Rohr-Aufsteckrichtung hinter dem zweiten Haltezahn 6.2 ab einer Abstandsstelle s6 vom freien Dornende 2a eine Zunahme des Außendurchmessers Da über einen Konusabschnitt 20, der an einer Stelle s7 in den nächsten Aufweitkonus 12 bzw. 12.3 übergeht, und der sich nach dem dritten Haltezahn 6.3 am Punkt s8 mit einem weiteren Konusabschnitt 22 von s8 bis s9 fortsetzt. Ein konkretes Ausführungsbeispiel wird weiter unten noch mit Angabe der relevanten Bemessungen beschrieben werden, woraus sich auch der erfindungsgemäße Anstieg des relativen Widerstandsmomentes Wp/s vom Punkt s6 bis s9 zum gehäuseseitigen Ende hin ergeben wird.

Gemäß einem weiteren, vierten Erfindungsaspekt ist erfindungsgemäß vorgesehen, dass die konische Oberfläche 10a des vorderen Einführkonus 10 eine derartige Rauigkeit mit einem arithmetischen Mittenrauwert Ra im Bereich von 1,1 bis 2,25 $\mu$m aufweist, dass beim Einstecken in die Rohrleitung im Bereich des Einführkonus 10 eine kraftschlüssige Vorfixierung des Anschlussdorns 2 im Mündungsbereich der Rohrleitung erreicht wird. Mit anderen Worten bedeutet dies, dass erfindungsgemäß vermieden wird, dass der Anschlussdorn 2 vor dem eigentlichen Eindornen wieder aus der Rohrleitung herausrutschen kann. Der Mittenrauwert Ra kann insbesondere gemäß VDI 3400, Abschnitt 1.4.1.3 im Bereich der dort beschriebenen Klassen K21 bis K27 liegen, wobei K21 einem Mittenrauwert Ra = 1,12 $\mu$m und K27 Ra = 2,24 $\mu$m entspricht. Vorzugsweise entspricht Ra mit 1,6 $\mu$m der Klasse K24 der genannten Norm.

An dieser Stelle sei nochmals bemerkt, dass die einzelnen bisher beschriebenen Erfindungsaspekte unabhängig voneinander, d. h. alternativ jeweils einzeln bei dem erfindungsgemäßen Leitungsverbinder 1 bzw. dessen Anschlussdorn 2 vorgesehen sein können. Sie können allerdings auch in beliebigen Kombinationen verwirklicht werden.

Im Folgenden werden noch weitere vorteilhafte Ausgestaltungsmerkmale beschrieben.

In bevorzugter Ausgestaltung ist der Leitungsverbinder 1 als einstückiges Formteil, insbesondere als Spritzformteil aus Kunststoff, ausgebildet. Besonders geeignet ist PA11/12 oder PBT (Polyamid 11/12 oder Polybuthylenterephtalath). In diesem Zusammenhang ist es wesentlich, den Bereich des Anschlussdorns 2 derart zu formen, dass die Dichtfläche 18 des Dichtabschnittes 16 in Umfangsrichtung glatt und formgratfrei ausgebildet ist. Dazu wird der Bereich des Dichtabschnittes 16 mit einem umfänglich geschlossenen Formteil geformt, welches axial entformt wird. Der übrige Bereich des Anschlussdorns 2 kann mit radialer Entformung geformt werden. Es ist weiterhin vorteilhaft, die Dichtfläche 18 für eine gute Dichtwirkung möglichst glatt, insbesondere mit einer maximalen Rautiefe $R_{max}$ von höchstens 10 $\mu$m auszubilden. Dies entspricht der Qualität einer glatten, polierten Oberfläche.

Bei den Ausführungen gemäß Fig. 1 bis 4 werden auch die dem Dichtabschnitt 16 vorgeordneten Abschnitte, d. h. der Einführkonus 10 und der Aufweitkonus 12.1, axial entformt, wobei der Aufweitkonus 12.1 für eine leichte Aufweitung der Rohrleitung entsprechend der Dichtfläche 18 möglichst glatt ausgebildet sein soll.

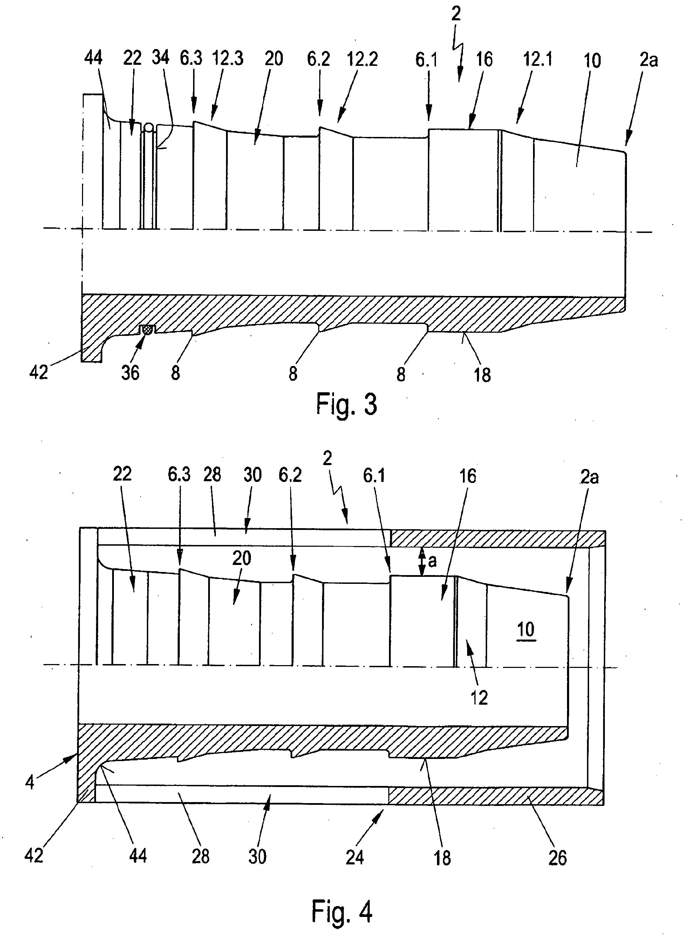

Wie beispielhaft in Fig. 4 dargestellt ist, kann mit dem Anschlussdorn 2 und/oder dem Verbindergehäuse 4 ein Dornschutz 24 insbesondere einstückig verbunden sein. Dieser Dornschutz 24 weist einen umfangsgemäß geschlossenen Schutzring 26 auf, der den freien Endbereich des Anschlussdorns 2 bis zu dem ersten Haltezahn 6.1 koaxial mit radialem Abstand a umschließt. Dieser ringförmige bzw. hohlzylindrische Schutzring 26 ist über axiale Verbindungsstege 28 mit dem hinteren, gehäuseseitigen Dornbereich verbunden. Die Verbindungsstege 28 begrenzen in Umfangsrichtung zwischen sich Fensteröffnungen 30 für radial bewegliche Formteile eines Formwerkzeugs. Der radiale Abstand a zwischen dem Anschlussdorn 2 und der Innenfläche des Schutzrings 26 entspricht mindestens der Wandstärke der zugehörigen Rohrleitung.

Der vordere Einführkonus 10 weist einen Konuswinkel $\alpha 1$ auf. Die Aufweitkonen 12 können jeweils den gleichen Konuswinkel $\alpha 12$ aufweisen. Dabei ist der Konuswinkel $\alpha 12$ größer als der Konuswinkel $\alpha 1$ des Einführkonus 10. Dadurch ergibt sich im Übergang des Einführkonus 10 zu dem anschließenden Aufweitkonus 12.1 eine Übergangskante 32. Der Konuswinkel $\alpha 1$ des Einführkonus 10 liegt vorzugsweise im Bereich von 8° bis 9°, während der Konuswinkel $\alpha 12$ des bzw. jedes Aufweitkonus 12 im Bereich von 14° bis 16°, vorzugsweise 15° liegt.

In weiterer vorteilhafter Ausgestaltung ist vorgesehen, dass der Dichtabschnitt 16 im Bereich der Dichtfläche 18 mit einer geringen Rundheitstoleranz von vorzugsweise maximal 0,02 bis 0,025 mm ausgebildet ist. Hierdurch ist auch bei oder nach Verdrehungen des Anschlussdorns 2 innerhalb der Rohrleitung um die Dornachse eine gute Dichtheit gewährleistet.

Für eine auch bei solchen Drehungen gleichbleibend gute mechanische Haltefunktion ist es zudem von Vorteil, wenn mindestens einer der Haltezähne 6 im Bereich seiner Haltekante 8 mit einer entsprechend geringen Rundheitstoleranz von vorzugsweise maximal 0,05 mm ausgebildet ist.

Weiterhin ist es für die Halte- und/oder Dichtfunktion von Vorteil, dass der Anschlussdorn 2 bezüglich seiner maximalen Außendurchmesser derart in Anpassung an die zugehörige Rohrleitung ausgelegt ist, dass einerseits im freien vorderen Endbereich des Anschlussdorns 2 eine Rohr-Aufdehnung stets nur im elastischen Bereich unterhalb der Streckgrenze, d.h. nur innerhalb der Gültigkeit des Hooke'schen Gesetzes, und andererseits im hinteren Endbereich eine Rohr-Aufdehnung bis zur Streckgrenze oder sogar bis oberhalb der Streckgrenze mit plastischer Verformung erfolgt, aber stets unterhalb der Bruchgrenze. Im freien vorderen Bereich sollte aber eine Rohr-Aufdehnung bis möglichst nahe an die Streckgrenze für eine gute Abdichtung und Halterung durch Erhöhung der elastischen Vorspannung erfolgen. Vorzugsweise wird eine Aufdehnung von 20 bis 25 % der Rohrwandung in Umfangsrichtung erreicht. Im hinteren Bereich kann die Rohrwandung bis zu mindestens 30 % gedehnt werden.

Wie beispielhaft in Fig. 3 und 6 jeweils dargestellt ist, kann der Anschlussdorn 2 zur zusätzlichen Abdichtung der Rohrleitung in seinem hinteren, gehäuseseitigen Endbereich eine in einer umfangsgemäßen Ringnut 34 sitzende, elastische Ringdichtung 36 aufweisen, z. B. einen O-Ring. Bei der Ausführung nach Fig. 3 ist diese Ringdichtung 36 im Bereich des hinteren Konusabschnittes 22 angeordnet. Im Falle der Ausführung nach Fig. 6 liegt die Ringdichtung 36 im Bereich des hinten angeordneten Dichtabschnittes 16.

Bei der in Fig. 1 veranschaulichten Ausführung des Leitungsverbinders 1 als Winkel-Steckverbinder geht der Anschlussdorn 2 über das Verbindergehäuse 4 in einen Steckabschnitt 38 über, wobei die Längsachsen des Anschlussdorns 2 und des Steckabschnittes 38 einen Verbinderwinkel von insbesondere 90° einschließen. Hierbei weist das Verbindergehäuse 4 in seinem dem Anschlussdorn 2 axial gegenüberliegenden Außenbereich eine Angriffsfläche 40 zum Beaufschlagen mit einer Schlag- oder Presskraft auf. Zum Eindornen kann z. B. mit einem Hammer auf die Angriffsfläche 40 geschlagen werden, um den Anschlussdorn 2 in die Rohrleitung einzutreiben. Es kann auch eine spezielle Montagevorrichtung verwendet werden.

Der Steckabschnitt 38 kann wie dargestellt als schaftförmiger Anschluss-Stecker einer Anschluss-Steckverbindung ausgebildet sein. Dieser Anschluss-Stecker kann in eine zugehörige Aufnahmemuffe eingesteckt werden.

Bei dieser Ausführung ist es in der Praxis häufig notwendig, den über den Anschlussdorn 2 bereits mit der Rohrleitung verbundenen Steckabschnitt 38 in eine für sein Einstecken steckbereite Ausrichtung zu bringen. Dazu muss der Anschlussdorn 2 innerhalb der Rohrleitung verdreht werden. Deshalb sind bei dieser Ausführung die oben bereits erläuterten Maßnahmen bezüglich der geringen Rundheitstoleranzen von Bedeutung.

Wie oben bereits angedeutet wurde, soll abschließend eine konkrete Ausführung anhand der Fig. 2 mit allen relevanten Bemessungen angegeben werden. Diese Ausführung ist speziell für ein PA-Rohr mit der Nenngröße 12 x 1,5 mm gemäß DIN 74324-1 konzipiert. Dieses Rohr weist folglich einen Außendurchmesser von 12 mm bei einer Wandstärke von 1,5 mm auf, was zu einem lichten Innendurchmesser von 9 mm führt.

Die Gesamtlänge L zwischen dem vorderen Dornende 2a und einem hinteren, gehäuseseitigen Rohr-Anschlagelement 42 beträgt in der konkreten Ausführung 29 mm. Der kleinere Außendurchmesser D1 am freien Dornende 2a beträgt 8,8 mm. Dieser Durchmesser vergrößert sich über den Einführkonus 10 auf den größeren Durchmesser D2 von 10,32 mm. Im Anschluss daran vergrößert sich der Außendurchmesser über den anschließenden Aufweitkonus 12.1 auf den Außendurchmesser D3 von 11,35 mm im Bereich der Dichtfläche 18 des Dichtabschnittes 16. Über den sich anschließenden ersten Haltezahn 6.1 und die durch die Stufenfläche 14 gebildete Haltekante 8 reduziert sich der Durchmesser auf D4 = 10,35 mm. Über den nächsten Aufweitkonus 12.2 vergrößert sich der Durchmesser bis zur Haltekante 8 des nächsten Haltezahns 6.2 bevorzugt wieder auf 11,35 mm. Hinter dem zweiten Haltezahn 6.2 schließt sich ein kurzer zylindrischer Abschnitt entsprechend dem Durchmesser D4 an. Im Abstandspunkt s6 beginnt der Konusabschnitt 20, an den sich im Abstandspunkt s7 der nächste Aufweitkonus 12.3 und der dritte Haltezahn 6.3 anschließen. Hinter dem dritten Haltezahn 6.3 reduziert sich der Durchmesser auf D5 = 11,3 mm, und dieser Durchmesser D5 steigt über den Konusabschnitt 22 bis zum Abstandspunkt s9 auf einen Durchmesser D6 von 11,9 mm an. Zwischen dem Punkt s9 und dem Anschlagelement 42 ist bevorzugt noch ein verrundeter Übergang 44 mit einem Rundungsradius von 1 mm angeordnet.

Was die axialen Bemessungen betrifft, so liegt die Übergangskante 32 zwischen dem Einführkonus 10 und dem angrenzenden Aufweitkonus 12.1 in einem Abstand s1 vom freien Stirnende 2a von 5,1 mm. Der Abstand s2 am Übergang zur Dichtfläche 18 beträgt 7 mm. Das hintere Ende des Dichtabschnittes 16 mit dem ersten Haltezahn 6.1 liegt in einem Abstandspunkt s3 von 11 mm. Der zweite Haltezahn 6.2 im Abstandspunkt s5 ist vom freien Dornende 2a um 17 mm beabstandet. Damit beträgt der Abstand XA zwischen der ersten und zweiten Haltekante 6 mm. Der erste Konusabschnitt 20 beginnt bei s6 in einem Abstand von 19 mm. Der Übergang zu dem nächsten Aufweitkonus 12.3 liegt in einem Abstand s7 von 22,13 mm. Der dritte Haltezahn 6.3 mit seiner Haltekante 8 ist vom freien Dornende 2a um den Abstand s8 von 24 mm entfernt, so dass der Zahnabstand XB 7 mm beträgt. Der sich anschließende Konusabschnitt 22 verläuft bis zum Abstand s9 = 28 mm.

Der vordere Konuswinkel $\alpha 1$ beträgt etwa 8,5°. Die Konuswinkel $\alpha 12$ der Aufweitkonen 12 betragen 15°. Die Winkel $\alpha 20$ und $\alpha 22$ der Konusabschnitte 20, 22 betragen vorzugsweise 4° bis 6°, insbesondere 5°.

Hinsichtlich der erfindungsgemäßen Querkraft-Verstärkung und der dazu vorgesehenen Zunahme des relativen Widerstandsmomentes $Wp/s$ ergibt sich mit den angegebenen Maßen Folgendes:

Am Punkt s6 ergibt sich mit dem Außendurchmesser 10,35 mm und dem konstanten Innendurchmesser $Di$ von 7,5 mm nach der oben genannten Gleichung ein Widerstandsmoment $Wp$ von 157,7 $mm^3$. Unter Berücksichtigung der axialen Länge von 19,0 mm bis zum freien Dornende 2a ergibt sich für $Wp/s = 8,3 \, mm^2$.

Im nächsten Abstandspunkt s7 beträgt der Außendurchmesser 10,9 mm, was zu einem Widerstandsmoment von 197,3 $mm^3$ führt. Unter Berücksichtigung der wirksamen Länge von 22,13 mm ergibt sich $Wp/s = 8,91 \, mm^2$, also eine Zunahme im Vergleich zu dem Punkt s6.

An der Stelle s8 hinter dem letzten Haltezahn 6.3 beträgt der Außendurchmesser 11,3 mm, woraus ein Widerstandsmoment $Wp = 228,3 \, mm^3$ resultiert. Bei dem Abstand 24,0 mm ergibt sich $Wp/s = 9,51 \, mm^2$, folglich wiederum ein weiterer Anstieg gegenüber s7.

Schließlich beträgt im Punkt s9 der Außendurchmesser 11,85 mm, so dass sich ein Widerstandsmoment von 274,3 $mm^3$ ergibt. Im Punkt s9 wirkt die freie Länge 28 mm, so dass $Wp/s = 9,80 \, mm^2$ beträgt.

Durch diese Zunahme des relativen Widerstandsmomentes Wp/s von s6 bis s9 und über den Übergang 44 bis zum Verbindergehäuse 4 ergibt sich die angestrebte erhöhte Biegesteifigkeit.

So konnte bei einer realisierten Ausführung als Winkel-Steckverbinder gemäß Fig. 1 bei einer Schlagbelastung von der dem Steckabschnitt 38 gegenüberliegenden Vorderseite, d. h. in Pfeilrichtung 46, eine Schlagarbeit von 8 bis 12 J gemessen werden. Mit einem herkömmlichen Anschlussdorn 2 konnten demgegenüber nur 6 bis 7 J erreicht werden.

Die erreichbare Schlagarbeit ist natürlich temperaturabhängig. Bei einer Temperatur von minus 40°C können 6,5 bis 8,6 J erreicht werden, bei Raumtemperatur 8,6 bis 10,7 J und bei 100°C sogar 12 bis 13,3 J.

Bei einer Schlagbelastung aus der anderen, gegenüberliegenden Richtung, siehe den Pfeil 48 in Fig. 1, beträgt die Schlagarbeit bei minus 40°C 2,9 bis 3,4 J, bei Raumtemperatur 3,4 bis 3,8 J und bei 100°C 8,2 bis 9,8 J.

Wie bereits erläutert wurde, wurde die Prüfung der Schlagbiegefestigkeit in Anlehnung an DIN 53453 mit einem Pendelschlagwerk gemäß DIN 51222 durchgeführt.

Für das Aufdornen (Aufstecken der Rohrleitung auf den Anschlussdorn 2) sowie auch für ein späteres Verdrehen des Anschlussdorns 2 in der Rohrleitung (was - wie oben schon erläutert wurde - z. B. zum Ausrichten eines Winkel-Steckverbinders notwendig ist) ist es vorteilhaft, zumindest den Bereich der Dichtfläche 18 des zylindrischen Dichtabschnittes 16 mit einer erhöhten Gleitfähigkeit auszubilden. Dies kann erreicht werden, indem der Bereich der Dichtfläche 18 mit einem Gleitmittel oder einer Gleitbeschichtung versehen oder aus einer zweiten, gleitfähigeren Materialkomponente, wie POM, hergestellt ist. Im letztgenannten Fall sollte zur Gewährleistung einer ausreichenden Haltekraft gegen Abziehen der Rohrleitung zumindest der Bereich der Haltekante 18 des ersten, an die Dichtfläche 18 angrenzenden Haltezahnes 6 (siehe Fig. 2) und ein kurzer, an die Haltekante 8 angrenzender Bereich der Dichtfläche 18 aus einer ersten Materialkomponente mit geringerer Gleitfähigkeit bestehen (wie oben schon erwähnt z. B. aus PA oder PBT). Bevorzugt kann zusätzlich auch der erste Aufweitkonus 12 in analoger Weise mit einer erhöhten Gleitfähigkeit ausgebildet sein, da hier der hauptsächliche radiale Aufweitprozess der Rohrleitung beginnt. Dagegen sollte aber der vordere Einführkonus 10 mit seiner konischen Oberfläche 10a die geringere Gleitfähigkeit haben, um die kraftschlüssige Vorfixierung der Rohrleitung auf dem Einführkonus 10 nicht zu beeinträchtigen.

Als Gleitmittel können Öle, wie Silikon- oder Mineralöle, Fette, Dispersionen oder dergleichen verwendet werden. Das jeweilige Gleitmittel kann auf geeignete Weise, z. B. mit einem Pinsel, oberflächig aufgetragen werden, oder der Anschlussdorn 2 wird in ein Gleitmittel eingetaucht. Beim Eintauch-Verfahren sollte zumindest der vordere Einführkonus 10 abgedeckt werden, um das Gleitmittel von der konischen Oberfläche 10a fernzuhalten. Bei der Ausführung gemäß Fig. 2 sollte die Eintauchtiefe mindestens bis zum hinteren Ende des Dichtabschnittes 16 mit dem ersten Haltezahn 16.1 im Abstandspunkt s3 und höchstens bis zum Abstandspunkt s4 am Beginn des nächsten Aufweitkonus 12.2 zum nächsten Haltezahn 6.2 hin reichen.

Durch die beschriebenen bevorzugten Maßnahmen für eine zonal erhöhte Gleitfähigkeit kann zunächst beim Aufdornen vorteilhafterweise eine Reduzierung der erforderlichen Montagekraft erreicht werden. Außerdem wird bei einem späteren Verdrehen des Anschlussdorns 2 innerhalb der Rohrleitung vorteilhafterweise auch das dazu erforderliche Drehmoment reduziert. Dadurch ist die Ausrichtung eines aufgedornten, vorzugsweise winkligen Steckverbinders mit seinem Steckabschnitt 38 (Fig. 1) relativ zu einer korrespondierenden, nicht dargestellten Steckkupplung mit geringem Kraftaufwand möglich.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

**Patentansprüche**

1.  Leitungsverbinder (1) für eine Kunststoff-Rohrleitung, insbesondere für ein PA-Rohr gemäß DIN 74324-1, mit einem einendig mit einem Verbindergehäuse (4) verbundenen und gegenüberliegend mit einem freien Dornende (2a) in die Rohrleitung einsteckbaren, rohrförmigen Anschlussdorn (2), wobei der Anschlussdorn (2) auf seinem Außenumfang ein Dornprofil mit einem vorderen, endseitigen Einführkonus (10) und drei über seine Länge verteilt angeordneten Haltezähnen (6/6.1, 6.2, 6.3) mit radial vorspringenden, in Umfangsrichtung verlaufenden, scharfkantigen Haltekanten (8) aufweist, wobei jeder Haltekante (8) ein sich in Aufsteckrichtung konisch erweiternder Aufweitkonus (12, 12.1, 12.2, 12.3) vorgelagert ist, wobei der Anschlussdorn (2) zusätzlich zu den Haltezähnen (6) einen zylindrischen Dichtabschnitt (16) mit einer umfangsgemäßen Dichtfläche (18) und mit einem derart an die Rohrleitung angepassten Außendurchmesser (D3) aufweist, dass die Rohrleitung unter elastischer Aufdehnung mit radialer Vorspannung zur dichtenden Anlage auf der Dichtfläche (18) gelangt, **dadurch gekennzeichnet, dass** die Haltezähne (6) mit ihren Haltekanten (8) jeweils über einen axialen Abstand (XA, XB) voneinander beabstandet sind, der in Anpassung an die zugehörige Rohrleitung und deren Innendurchmesser derart bemessen ist, dass der Abstand (XA, XB) mindestens 2/3 des Rohr-Innendurchmessers entspricht, und/oder der mindestens dem halben Außendurchmesser eines der Haltezähne (6) bzw. der Dichtfläche (18) entspricht, wobei der Anschlussdorn (2) bezüglich der maximalen Außendurchmesser derart in Anpassung an die zugehörige Rohrleitung ausgelegt ist, dass einerseits im freien vorderen Endbereich eine Rohr-Aufweitung stets nur im elastischen Bereich unterhalb der Streckgrenze und andererseits im hinteren Endbereich eine Rohr-Aufweitung vorzugsweise bis oberhalb der Streckgrenze mit plastischer Verformung erfolgt, wobei in Rohr-Aufsteckrichtung hinter dem zweiten Haltezahn (6.2) ab einer Abstandsstelle (s6) vom freien Dornende (2a) eine Zunahme des Außendurchmessers ($D_a$) über einen Konusabschnitt (20) beginnt, der an einer Stelle (s7) in den nächsten Aufweitkonus (12.3) übergeht, und der sich nach dem dritten Haltezahn (6.3) an einem Punkt (s8) mit einem weiteren Konusabschnitt (22) von dem Punkt (s8) bis zu einem Punkt (s9) fortsetzt, wobei der Anschlussdorn (2) bezüglich seines kreisringförmigen Querschnitts und seines daraus resultierenden Widerstandsmomentes ($W_p$) über seine Länge hinweg derart ausgelegt ist, dass in dem hinteren, gehäuseseitigen Teilbereich seiner Länge ausgehend von der Abstandsstelle (s6) vom freien vorderen Dornende (2a) in Richtung des Verbindergehäuses (4) nach hinten der Quotient ($W_p/s$) aus dem jeweiligen Widerstandsmoment ($W_p$) und dem zugehörigen, axial vom freien Dornende (2a) gemessenen Abstand (s) zunimmt sowie der zylindrische Dichtabschnitt (16) zwischen dem ersten Haltezahn (6.1) und dem zugehörigen, vorgeordneten Aufweitkonus (12.1) angeordnet ist.

2. Leitungsverbinder nach Anspruch 1,
   **dadurch gekennzeichnet, dass** der vordere Einführkonus (10) eine derart raue Oberfläche (10a) mit einem arithmetischen Mittenrauwert $R_a$ im Bereich von 1,1 bis 2,25 $\mu$m aufweist, dass beim Einstecken in die Rohrleitung im Bereich des Einführkonus (10) eine kraftschlüssige Vorfixierung des Anschlussdorns (2) im Mündungsbereich der Rohrleitung erreicht wird.

3. Leitungsverbinder nach Anspruch 1 oder 2,

**dadurch gekennzeichnet, dass** die Dichtfläche (18) des Dichtabschnittes (16) in Umfangsrichtung glatt und formgratfrei ausgebildet ist.

4. Leitungsverbinder nach einem der Ansprüche 1 bis 3,
   **dadurch gekennzeichnet, dass** der Einführkonus (10) mittelbar über den Aufweitkonus (12.1) in die Dichtfläche (18) des zylindrischen Dichtabschnittes (16) übergeht.

5. Leitungsverbinder nach Anspruch 4,
   **dadurch gekennzeichnet, dass** der Aufweitkonus (12.1) des vorderen Haltezahns (6.1) eine in Umfangsrichtung glatte und formgratfreie Oberfläche aufweist.

6. Leitungsverbinder nach Anspruch 4 oder 5,
   **dadurch gekennzeichnet, dass** sich an den Dichtabschnitt (16) in seinem hinteren, dem Verbindergehäuse (4) zugewandten Bereich eine radiale, den Durchmesser reduzierende Stufenfläche (14) anschließt, wobei der Übergang zwischen der Dichtfläche (18) und der Stufenfläche (14) scharfkantig als Haltekante (8) des - vom freien Ende (2a) aus gesehen - ersten Haltezahns (6.1) ausgebildet ist.

7. Leitungsverbinder nach einem der Ansprüche 1 bis 6,
   **gekennzeichnet durch** einen mit dem Anschlussdorn (2) und/oder dem Verbindergehäuse (4) insbesondere einstückig verbundenen Dornschutz (24) mit einem den freien Endbereich des Anschlussdorns (2) bis zu dem ersten Haltezahn (6.1) am hinteren Ende des Dichtabschnittes (16) koaxial mit radialem Abstand (a) umschließenden, umfangsgemäß geschlossenen Schutzring (26), der über axiale Verbindungsstege (28) mit dem hinteren, gehäuseseitigen Dornbereich verbunden ist, wobei die Verbindungsstege (28) in Umfangsrichtung Fensteröffnungen (30) für Formteile eines Formwerkzeugs begrenzen.

8. Leitungsverbinder nach einem der Ansprüche 1 bis 7,
   **dadurch gekennzeichnet, dass** der Anschlussdorn (2) - bei einer vom freien vorderen Ende (2a) bis zu einem hinteren, gehäuseseitigen Endanschlag (42) für die aufgesteckte bzw. aufzusteckende Rohrleitung gemessenen Gesamtlänge (L) im Bereich von 28 bis 30 mm, insbesondere 29 mm die Haltezähne (6) aufweist.

9. Leitungsverbinder nach einem der Ansprüche 1 bis 8,
   **dadurch gekennzeichnet, dass** die Haltekanten (8) der Haltezähne (6) scharfkantig mit einem maximalen Kantenradius von 0,03 mm bis höchstens 0,1 mm ausgebildet sind.

**10.** Leitungsverbinder nach einem der Ansprüche 4 bis 9,
**dadurch gekennzeichnet, dass** der Einführkonus (10) mit einem kleineren, flacheren Konuswinkel ($\alpha$1) als der an ihn angrenzende Aufweitkonus (12) ausgebildet ist.

**11.** Leitungsverbinder nach einem der Ansprüche 1 bis 10,
**dadurch gekennzeichnet, dass** der Dichtabschnitt (16) im Bereich der Dichtfläche (18) mit einer geringen Rundheitstoleranz von maximal 0,02 mm bis 0,025 mm ausgebildet ist.

**12.** Leitungsverbinder nach einem der Ansprüche 1 bis 11,
**dadurch gekennzeichnet, dass** mindestens einer der Haltezähne (6) im Bereich seiner Haltekante (8) mit einer geringen Rundheitstoleranz von maximal 0,05 mm ausgebildet ist.

**13.** Leitungsverbinder nach einem der Ansprüche 1 bis 12,
**dadurch gekennzeichnet, dass** der bestimmte Abstand (s6), ab dem das relative, auf die jeweilige axiale Länge (s) bezogene Widerstandsmoment (Wp/s) zunimmt, bei einer Gesamtlänge (L) des Anschlussdorns (2) von 28 mm bis 30 mm bei etwa 18 mm bis 20 mm vom freien Ende (2a) liegt.

**14.** Leitungsverbinder nach einem der Ansprüche 2 bis 13,
**dadurch gekennzeichnet, dass** die raue Oberfläche (10a) des vorderen Einführkonus (10) einen Mittenrauwert Ra von 1,6 $\mu$m aufweist.

**15.** Leitungsverbinder nach einem der Ansprüche 1 bis 14,
**gekennzeichnet durch** eine Ausgestaltung als Winkel-Steckverbinder, wobei der Anschlussdorn (2) über das Verbindergehäuse (4) in einen Steckabschnitt (38) übergeht und die Längsachse des Anschlussdorns (2) mit der Längsachse des Steckabschnittes (38) einen Verbinderwinkel von insbesondere 90° einschließt.

**16.** Leitungsverbinder nach Anspruch 15,
**dadurch gekennzeichnet, dass** das Verbindergehäuse (4) in seinem dem Anschlussdorn (2) axial gegenüberliegenden Außenbereich eine Angriffsfläche (40) zum Beaufschlagen mit einer Kraft aufweist.

**17.** Leitungsverbinder nach Anspruch 15 oder 16,
**dadurch gekennzeichnet, dass** der Steckabschnitt (38) als Anschluss-Stecker einer Anschluss-Steckverbindung ausgebildet ist.

**18.** Leitungsverbinder nach einem der Ansprüche 1 bis 17,
**gekennzeichnet durch** eine einstückige Ausbildung als Formteil, insbesondere als Spritzformteil aus Kunststoff, wie PA11/12 oder PBT.

**19.** Leitungsverbinder nach einem der Ansprüche 1 bis 18,
**dadurch gekennzeichnet, dass** zumindest der Bereich der Dichtfläche (18) des Dichtabschnittes (16) sowie bevorzugt auch der Bereich des ersten Aufweitkonus (12.1) mit einer gegenüber den übrigen Oberflächenbereichen erhöhten Gleitfähigkeit ausgebildet ist.

**Claims**

**1.** Line connector (1) for a plastic pipeline, in particular for a PA pipe in accordance with DIN 74324-1, having a tubular connection barb (2) which, at one end, is connected to a connector housing (4) and, opposite, can be plugged into the pipeline by way of a free barb end (2a), wherein the connection barb (2), on its outer circumference, has a barb profile with a front, end-side introduction cone (10) and three retaining teeth (6/6.1, 6.2, 6.3), which are distributed over its length and have radially projecting, sharp retaining edges (8) running in the circumferential direction, wherein each retaining edge (8) has arranged in front of it a widening cone (12, 12.1, 12.2, 12.3) which widens conically in the plug-on direction, wherein the connection barb (2), in addition to the retaining teeth (6), has a cylindrical sealing portion (16) with a circumferential sealing surface (18) and with an external diameter (D3) which is adapted to the pipeline such that the pipeline expands elastically to come into sealing abutment, with radial prestressing, against the sealing surface (18), **characterized in that** the retaining teeth (6) have their retaining edges (8) spaced apart from one another in each case via an axial distance (XA, XB) which is dimensioned in adaptation to the associated pipeline and the internal diameter thereof, such that the distance (XA, XB) corresponds to at least 2/3 of the internal pipe diameter, and/or it corresponds to at least half the external diameter of one of the retaining teeth (6) or the sealing surface (18), wherein the connection barb (2) is designed, in respect of the maximum external diameter, in adaptation to the associated pipeline such that, on the one hand in the free, front end region pipe widening always takes place only in the elastic range below the yield strength and, on the other hand in the rear end region pipe widening takes place with plastic deformation preferably to above the yield strength, wherein an increase in the external diameter ($D_a$) via a cone portion (20) begins following the second retaining tooth (6.2), as seen in the plug-on direction of pipe, from a distance location (s6) from the free barb end (2a), said cone portion (20) merging, at a location (s7), into the next widening cone (12.3) and at a point (s8), following the third retaining tooth (6.3), said cone portion (20) continuing, from point (s8) to a point (s9), with a further cone portion (22), wherein the connection barb (2), in respect of its annular cross section and of its resulting moment of resistance (Wp), is designed over its length such that in the rear, housing-side sub-region of its length, proceeding rearward in the direction of the connector housing (4) from the distance location (s6) from the free front barb end (2a), there is an increase in the quotient (Wp/s) of the respective moment of resistance (Wp) and the associated distance (s) measured axially from the free barb end (2a), and the cylindrical sealing portion (16) is arranged between the first retaining tooth (6.1) and the associated widening cone (12.1) arranged in front.

2. Line connector according to Claim 1, **characterized in that** the front introduction cone (10) has a surface (10a) with such roughness, having an arithmetical mean roughness value $R_a$ ranging from 1.1 to 2.25 $\mu$m, that, when plugged into the pipeline in the region of the introduction cone (10), the connection barb (2) is fixed on a preliminary basis in a force-fitting manner in the mouth-opening region of the pipeline.

3. Line connector according to Claim 1 or 2, **characterized in that** the sealing surface (18) of the sealing portion (16) is designed to be smooth, and free of molding flash, in the circumferential direction.

4. Line connector according to one of Claims 1 to 3, **characterized in that** the introduction cone (10) merges indirectly via the widening cone (12.1) into the sealing surface (18) of the cylindrical sealing portion (16).

5. Line connector according to Claim 4, **characterized in that** the widening cone (12.1) of the front retaining tooth (6.1) has a surface which is smooth, and free of molding flash, in the circumferential direction.

6. Line connector according to Claim 4 or 5, **characterized in that** the sealing portion (16) is followed in its rear region, which is directed toward the connector housing (4), by a radial, diameter-reducing step surface (14), wherein the transition between the sealing surface (18) and the step surface (14) is designed as a sharp retaining edge (8) of the first retaining tooth (6.1) - as seen from the free end (2a).

7. Line connector according to one of Claims 1 to 6,

**characterized by** a barb guard (24) which is connected, in particular in one piece, to the connection barb (2) and/or the connector housing (4) and has a circumferentially closed guard ring (26) which encloses the free end region of the connection barb (2), as far as the first retaining tooth (6.1) at the rear end of the sealing portion (16), coaxially, at a radial distance (a) therefrom, and is connected to the rear, housing-side barb region via axial connecting crosspieces (28), wherein the connecting crosspieces (28) delimit, in the circumferential direction, window openings (30) for parts of a mold.

8. Line connector according to one of Claims 1 to 7, **characterized in that** the connection barb (2) - with an overall length (L) ranging from 28 to 30 mm, in particular of 29 mm, as measured from the free, front end (2a) to a rear, housing-side end stop (42) for the pipeline which has been, or is to be, plugged on - has the retaining teeth (6).

9. Line connector according to one of Claims 1 to 8, **characterized in that** the retaining edges (8) of the retaining teeth (6) are designed to be sharp with a maximum edge radius of 0.03 mm to at most 0.1 mm.

10. Line connector according to one of Claims 4 to 9, **characterized in that** the introduction cone (10) is designed with a smaller, shallower cone angle ($\alpha$1) than the widening cone (12), which is adjacent to it.

11. Line connector according to one of Claims 1 to 10, **characterized in that** the sealing portion (16), in the region of the sealing surface (18), is designed with a small roundness tolerance of at most 0.02 mm to 0.025 mm.

12. Line connector according to one of Claims 1 to 11, **characterized in that** at least one of the retaining teeth (6), in the region of its retaining edge (8), is designed with a small roundness tolerance of at most 0.05 mm.

13. Line connector according to one of Claims 1 to 12, **characterized in that** the specific distance (s6) from which there is an increase in the relative moment of resistance (Wp/s), as seen in relation to the respective axial length (s), is approximately 18 mm to 20 mm from the free end (2a), with an overall length (L) of the connection barb (2) of 28 mm to 30 mm.

14. Line connector according to one of Claims 2 to 13, **characterized in that** the rough surface (10a) of the front introduction cone (10) has a mean roughness value Ra of 1.6 $\mu$m.

15. Line connector according to one of Claims 1 to 14, **characterized by** a configuration as an angled plug-in connector, wherein the connection barb (2) merges, via the connector housing (4), into a plug-in portion (38), and the longitudinal axis of the connection barb (2) encloses a connector angle of, in particular, 90° with the longitudinal axis of the plug-in portion (38).

16. Line connector according to Claim 15, **characterized in that** the connector housing (4), in its outer region located axially opposite the connection barb (2), has an engagement surface (40) which can be subjected to force.

17. Line connector according to Claim 15 or 16, **characterized in that** the plug-in portion (38) is designed as a connection plug of a plug-in connecting means.

18. Line connector according to one of Claims 1 to 17, **characterized by** a single-piece design as a molding, in particular as an injection molding made of plastic, such as PA11/12 or PBT.

19. Line connector according to one of Claims 1 to 18, **characterized in that** at least the region of the sealing surface (18) of the sealing portion (16) and preferably also the region of the first widening cone (12.1) are designed with increased sliding capability in relation to the other surface regions.


**Revendications**

1. Connecteur de conduite (1) pour une conduite tubulaire en plastique, notamment pour un tube en PA selon la norme DIN 74324-1, avec un mandrin de raccordement (2) en forme de tube relié à une extrémité à un boîtier de connecteur (4) et pouvant être enfiché à l'extrémité opposée dans la conduite tubulaire avec une extrémité de mandrin (2a) libre, le mandrin de raccordement (2) comportant sur sa circonférence extérieure un profil de mandrin avec un cône d'introduction (10) avant situé du côté d'extrémité et trois dents d'arrêt (6 / 6.1, 6.2, 6.3) disposées de façon répartie sur l'ensemble de sa longueur avec des bords d'arrêt (8) à arêtes vives saillant en avant dans le plan radial s'étendant dans la direction circonférentielle, un cône élargi (12, 12.1, 12.2, 12.3) s'élargissant à la façon d'un cône dans la direction d'enfichage étant placé avant chaque bord d'arrêt (8), le mandrin de raccordement (2) comportant, en sus des dents d'arrêt (6), une section d'étanchéité (16) cylindrique avec une surface d'étanchéité (18) conforme à la circonférence et avec un diamètre extérieur (D3) adapté de telle sorte à la conduite tubulaire que la conduite tubulaire arrive par dilatation élastique et précontrainte radiale jusqu'à l'installation étanchéifiée, sur la surface d'étanchéité (18) ;

**caractérisé en ce que** les dents d'arrêt (6) sont disposées à une certaine distance l'une de l'autre avec leurs bords d'arrêt (8) respectivement à une certaine distance (XA, XB) axiale dimensionnée de telle sorte, pour s'adapter à la conduite tubulaire associée et à son diamètre intérieur, que la distance (XA, XB) correspond au moins aux 2/3 du diamètre intérieur de tube et/ou au moins à la moitié du diamètre extérieur d'une des dents d'arrêt (6) et/ou de la surface d'étanchéité (18), le mandrin de raccordement (2) étant conçu de telle sorte par rapport au diamètre extérieur maximal, pour l'adapter à la conduite tubulaire associée, que d'une part dans la zone d'extrémité avant libre, un élargissement de tube ne se produit toujours que dans la zone élastique en dessous de la limite d'extension et que d'autre part dans la zone d'extrémité arrière, un élargissement de tube se produit avec une déformation plastique de préférence jusqu'au-dessus de la limite d'extension, un accroissement du diamètre extérieur $(D_a)$ au-delà d'une section conique (20) commençant dans la direction d'enfichage du tube, derrière la deuxième dent d'arrêt (6.2), à partir d'un certain point d'écartement (s6) par rapport à l'extrémité de mandrin (2a) libre, ladite section se transformant en un point (s7) pour prendre la forme du cône élargi (12.3) suivant et saillant, après la troisième dent d'arrêt (6.3), en un point (s8), avec une section conique (22) supplémentaire, du point (s8) jusqu'à un point (s9), le dôme de raccordement (2) étant conçu pour s'éloigner de telle sorte sur toute sa longueur par rapport à sa section transversale en forme de couronne circulaire et son couple de résistance (Wp) en résultant, de telle sorte que le quotient (Wp/s) du couple de résistance (Wp) respectif et de la distance (s) associée mesurée dans le plan axial à partir de l'extrémité de mandrin (2a) libre augmente dans la zone partielle arrière, située du côté du boîtier, de sa longueur, en partant du point d'écartement (s6) depuis l'extrémité de mandrin (2a) avant libre en direction du boîtier de connecteur (4), vers l'arrière, et la section d'étanchéité (16) cylindrique étant disposée entre la première dent d'arrêt (6,1) et le cône élargi (12.1) associé placé devant.

2. Connecteur de conduite selon la revendication 1, **caractérisé en ce que** le cône d'introduction (10) avant comporte une surface (10a) brute telle, avec une valeur brute moyenne $R_a$ arithmétique dans la plage de 1,1 à 2,25 μm, qu'en cas d'enfichage dans la conduite tubulaire dans la région du cône d'introduction (10), une préfixation réalisée par complémentarité de forces du mandrin de raccordement (2) est atteinte dans la zone d'embouchure de la conduite tubulaire.

3. Connecteur de conduite selon la revendication 1 ou 2, **caractérisé en ce que** la surface d'étanchéité (18) de la section d'étanchéité (16) est réalisée à plat et sans ébarbure de forme dans la direction circonférentielle.

4. Connecteur de conduite selon l'une quelconque des revendications 1 à 3, **caractérisé en ce que** le cône d'introduction (10) se transforme indirectement via le cône élargi (12.1) pour prendre la forme de la surface d'étanchéité (18) de la section d'étanchéité (16) cylindrique.

5. Connecteur de conduite selon la revendication 4, **caractérisé en ce que** le cône élargi (12.1) de la dent d'arrêt (6.1) avant comporte une surface plate et sans ébarbures de forme dans la direction circonférentielle.

6. Connecteur de conduite selon la revendication 4 ou 5, **caractérisé en ce qu'**une surface à étages (14) radiale réduisant le diamètre se raccorde à la section d'étanchéité (16) dans sa zone arrière orientée vers le boîtier de connecteur (4), la transition entre la surface d'étanchéité (18) et la surface à étages (14) étant réalisée à arêtes vives sous la forme du bord d'arrêt (8) de la première dent d'arrêt (6.1) - vue depuis l'extrémité libre (2a).

7. Connecteur de conduite selon l'une quelconque des revendications 1 à 6, **caractérisé par** la présence d'une protection de mandrin (24) reliée, notamment d'un seul tenant, au mandrin de raccordement (2) et/ou au boîtier de connecteur (4), avec une bague de protection (26) fermée conforme à la circonférence ceignant la zone d'extrémité libre du mandrin de raccordement (2) jusqu'à la première dent d'arrêt (6.1) au niveau de l'extrémité arrière de la section d'étanchéité (16), dans le plan coaxial avec une certaine distance radiale (a), ladite bague étant reliée à la zone de mandrin arrière située côté carter via les étais de liaison (28) axiaux, les étais de liaison (28) délimitant dans la direction circonférentielle des ouvertures de fenêtre (30) pour les pièces moulées d'un outil de forme.

8. Connecteur de conduite selon l'une quelconque des revendications 1 à 7, **caractérisé en ce que** le mandrin de raccordement (2) comporte les dents d'arrêt (6) - pour une longueur totale (L) mesurée de l'extrémité avant (2a) libre jusqu'à une butée d'extrémité (42) arrière située côté carter, pour la conduite tubulaire enfichée et/ou à enficher dans la plage de 28 à 30 mm, notamment de 29 mm.

9. Connecteur de conduite selon l'une quelconque des revendications 1 à 8, **caractérisé en ce que** les bords d'arrêt (8) des dents d'arrêt (6) sont réalisés à arêtes vives avec un rayon d'arête maximal de 0,03 mm jusqu'à maximum 0,1 mm.

10. Connecteur de conduite selon l'une quelconque des revendications 4 à 9, **caractérisé en ce que** le cône d'introduction (10) est réalisé avec un angle conique (a1) plus plat que le cône élargi (12) connexe et inférieur à lui.

11. Connecteur de conduite selon l'une quelconque des revendications 1 à 10, **caractérisé en ce que** la section d'étanchéité (16) est réalisée dans la zone de la surface d'étanchéité (18) avec une tolérance de rotondité réduite de maximum 0,02 mm à 0,025 mm.

12. Connecteur de conduite selon l'une quelconque des revendications 1 à 11, **caractérisé en ce qu'**au moins une des dents d'arrêt (6) est réalisée dans la région de son bord d'arrêt (8) avec une tolérance de rotondité réduite de 0,05 mm maximum.

13. Connecteur de conduite selon l'une quelconque des revendications 1 à 12, **caractérisé en ce que** la distance définie (s6) à partir de laquelle le couple de résistance (Wp/s) relatif à la longueur (s) axiale respective augmente se situe, pour une longueur totale (L) du mandrin de raccordement (2), de 28 mm à 30 mm pour une distance d'approximativement 18 mm à 20 mm de l'extrémité libre (2a).

14. Connecteur de conduite selon l'une quelconque des revendications 2 à 13, **caractérisé en ce que** la surface (10a) brute du cône d'introduction (10) avant comporte une valeur brute Ra moyenne de 1,6 $\mu$m.

15. Connecteur de conduite selon l'une quelconque des revendications 1 à 14, **caractérisé par** la présence d'une configuration prenant la forme d'un connecteur enfichable d'angle, le mandrin de raccordement (2) se transformant via le boîtier de connecteur (4) en une section d'enfichage (38) et l'axe longitudinal du mandrin de raccordement (2) incluant, avec l'axe longitudinal de la section d'enfichage (38), un angle de connecteur de notamment 90°.

16. Connecteur de conduite selon la revendication 15, **caractérisé en ce que** le boîtier de connecteur (4) comporte une surface de préhension (40) à charger avec une force dans sa zone extérieure dans le plan axial opposée au mandrin de raccordement (2).

17. Connecteur de conduite selon la revendication 15 ou 16, **caractérisé en ce que** la section d'enfichage (38) prend la forme d'une fiche de raccordement d'une liaison d'enfichage de raccordement.

18. Connecteur de conduite selon l'une quelconque des revendications 1 à 17, **caractérisé par** la présence d'une configuration réalisée en un seul tenant sous la forme d'une pièce moulée, notamment sous la forme d'une pièce moulée injectée en matière plastique, par exemple en PA11/12 ou PBT.

**19.** Connecteur de conduite selon l'une quelconque des revendications 1 à 18, **caractérisé en ce qu'**au moins la zone de la surface d'étanchéité (18) de la section d'étanchéité (16) ainsi que de façon préférée également la zone du premier cône élargi (12.1) est réalisée avec une capacité de glissement accrue par rapport aux zones superficielles restantes.

Fig. 1

Fig. 2

Fig. 3

Fig. 4

Fig. 5

Fig. 6

**EP 2 694 858 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4005474 A1